# EUROPEAN PATENT APPLICATION

(11) **EP 4 207 840 A1**
(43) Date of publication of application: **05.07.2023**
(21) Application number: 22216788.4
(22) Date of filing: 27.12.2022
(51) Int. Cl.: H04W 4/80

(54) **WIRELESS COMMUNICATION DEVICE AND METHOD FOR CONTROLLING WIRELESS COMMUNICATION THEREOF**

(30) Priority: 28.12.2021 JP 2021213577
(71) Applicant: Faurecia Clarion Electronics Co., Ltd., Saitama-shi, Saitama 330-0081 (JP)
(72) Inventor: OHNO, Nobuhiro, SAITAMA, 330-0081 (JP); WATANABE, Yasumasa, SAITAMA, 330-0081 (JP)
(74) Representative: Lavoix

(57) **Abstract**

[Problem to be Solved]

To reduce the burden on a user.

[Means for Resolution]

A wireless connection device comprises: a display unit; a pairing unit for pairing a plurality of communication terminals; a display control unit for displaying, on the display unit, a query screen for querying whether or not to connect a first communication terminal with priority over another communication terminal when, among a plurality of communication terminals, pairing has been established for the first communication terminal; a receiving unit for receiving an instruction for connecting the first communication terminal with priority over another communication terminal; a priority information control unit for storing, in a storing unit, a priority setting that indicates that the first communication terminal is to be connected with priority over another communication terminal upon the receiving unit receiving the instruction; a detecting unit for detecting the presence of a plurality of communication terminals; and a connection control unit for connecting the first communication terminal with priority over the other communication terminal when the detecting unit has detected the presence of the first communication terminal and the priority setting is stored in the storing unit.

## Description

### [Field of Technology]

The present invention relates to a wireless communication device and a method for controlling wireless communication thereof.

### [Prior Art]

Some onboard devices, such as navigation devices, operate as wireless connection devices through a near-field wireless communication function using Bluetooth^{®}. Using the near-field wireless communication, the onboard device can be connected with communication terminals, such as a smart phone. This enables the onboard device, which is a wireless connection device, to play music data stored in the communication terminal for example.

When there is a plurality of communication terminals that have been paired with such a wireless connection device, it depends on the specifications of the wireless connection device which of the communication terminals is selected to be connect with the wireless connection device. For example, in Patent Document 1, when an onboard device that is a wireless connection device has detected the communication terminal that was most recently connected thereto, that communication terminal is connected with higher priority than the other communication terminals. Given this, when the user wishes a connection between the onboard device and another communication terminal that is other than the communication terminal that was connected most recently, the user must change the device to be connected by following the connection change screen displayed by the onboard device.

### [Prior Art Documents]

### [Patent Document]

[Patent Document 1] JP 2015-133595 A

### [Summary of the Invention]

### [Problem Solved by the Present Invention]

However, considering the case that the user wants to connect the onboard device with the preferred communication terminal other than the communication terminal that was connected most recently, it is irritating to the user being forced to manipulate the connection change screen provided by the onboard device even though the paring with the preferred communication terminal has been already completed.

The present invention was created in contemplation of such a situation, and the object thereof is to reduce the burden on the user.

### [Means for Solving the Problem]

The present invention includes a plurality of means for solving the problem above at least partially but an example thereof is the below.

In order to solve the problem above, one aspect of the present invention is a wireless communication device comprising: a display unit; a pairing unit that is capable to pair a plurality of communication terminals with the wireless communication device; a display control unit that displays a query screen on the display unit for querying whether or not to connect a first communication terminal with priority over other communication terminals when pairing has been established for the first communication terminal among the communication terminals; a receiving unit that receives an instruction for connecting the first communication terminal with priority over other communication terminals; a priority information managing unit that stores a priority setting in a storing unit, the priority setting indicates that the first communication terminal is to be connected with priority over other communication terminals upon the receiving unit receiving the instruction; a detecting unit that detects presence of any of the communication terminals; and a connection control unit the connects the first communication terminal with priority over the other communication terminals if and the priority setting is stored in the storing unit when the detecting unit detects the presence of the first communication terminal.

### [Effects of the Invention]

According to the above aspect of the present invention, it is able to reduce the burden on the user.

Other problems, structures, and effects may be appreciated through the explanation of the embodiment below.

### [Brief Descriptions of the Drawings]

FIG. 1 is a schematic diagram showing an example of an onboard device according to the present embodiment.
FIG. 2 is a structural diagram showing examples of functions of the onboard device according to the present embodiment.
FIG. 3 is a schematic diagram showing an example of pairing information.
FIG. 4 is a schematic diagram showing an example of a query screen.
FIG. 5 is a schematic diagram showing an example of priority information.
FIG. 6 shows an example of the screen display when priority connection is set.
FIG. 7 is a schematic diagram showing an example of connection sequence information.
FIG. 8 is a flowchart showing an example of processing when pairing with a communication terminal.
FIG. 9 is a flowchart showing an example of processing when connecting, through Bluetooth^{®}, with a communication terminal that has been paired.
FIG. 10 is a schematic diagram showing an example of priority information relating to a modified example.
FIG. 11 is a structural diagram showing an example of hardware of an onboard device according to the present embodiment.

### [Forms for Carrying Out the Present Invention]

One embodiment according to the present invention will be explained below based on the drawings. As a rule, in all the drawings, identical reference symbols are assigned to identical members, and redundant explanations thereof are omitted as appropriate. In the embodiments below, the structural elements (including elemental steps, and the like), unless explicitly indicated or clearly required in principle, are not absolutely necessary. Statements such as "comprises A," "made from A," "having A," and "including A" do not indicate that the other elements are absent, unless there is an explicit statement that no other element is included. In the embodiment below references to shapes, positional relationships of the structural elements also include elements that approximate or are substantially similar to the shapes, unless explicitly stated or, by principle, one may believe otherwise.

### < The Embodiment >

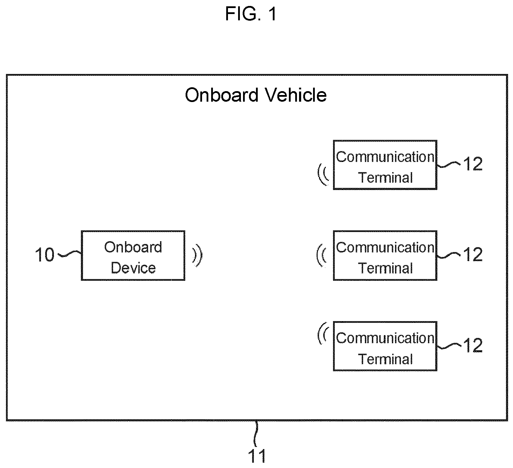

FIG. 1 shows an onboard device 10 that has a wireless connecting function, as an example of a wireless connection device according to the present embodiment. The onboard device 10 is an onboard navigation device or audio device installed in an automobile 11. For example, the onboard device 10 comprises mounting hardware (a bracket) for installing in a console panel, and is installed in the console panel in the vehicle through the mounting hardware.

FIG. 1 shows an example wherein a plurality of communication terminals 12 is present within the automobile 11. Insofar as the communication terminals 12 are terminals that can be connected to the onboard device 10 through near-field wireless communication, there is no particular limitation on the type thereof. Such communication terminals 12 may be, for example, smart phones or wireless headphones. In the present embodiment, Bluetooth^{®} is used a the near-field wireless communication. Bluetooth^{®} enables the onboard device 10 to play music data stored in the communication terminals 12, to be used as a speaker for hands-free voice communication with the communication terminal 12. The near-field wireless communication is not limited to Bluetooth^{®}, but instead may be based on another standard.

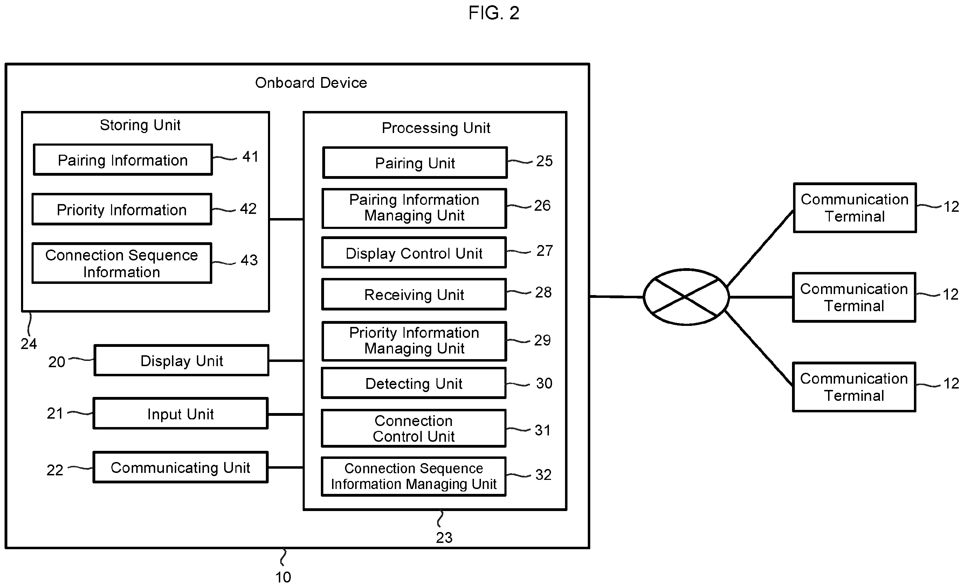

FIG. 2 is a functional structural diagram showing an example of an onboard device 10 according to the present embodiment. As illustrated in FIG. 2, the onboard device 10 comprises a display unit 20, an input unit 21, a communicating unit 22, a processing unit 23 and a storing unit 24.

The display unit 20 is a liquid crystal display or an organic EL (Electro Luminescence) display for displaying various types of screens. The display unit 20 displays not only a navigation screen relating to a navigation function. The display unit 20 also displays an air conditioning screen for setting the temperature and fan power of an air conditioner, an AV screen for selecting audio or video to be played and for adjusting the playback volume and image quality, an application screen of application executed by the connected communication terminal 12, and telephone screen for making and receiving telephone calls. The display unit 20 may also display images captured by an onboard camera.

The input unit 21 is a touch panel that is combined together with a liquid crystal display to provide the display unit 20 and to receive various information inputted by the user.

The communicating unit 22 is an interface for connecting to each individual communication terminal 12 through a communication standard based on Bluetooth^{®}.

The processing unit 23 executes a process for controlling each of the units of the onboard device 10. The processing unit 23 comprises, for example, a pairing unit 25, a pairing information managing unit 26, a display control unit 27, a receiving unit 28, a priority information managing unit 29, a detecting unit 30, a connection control unit 31 and a connection sequence information managing unit 32.

The pairing unit 25 establishes pairing with the communication terminals 12.

The pairing information managing unit 26 stores pairing information 41 in the storing unit 24 when it has established pairing with each of the communication terminals 12.

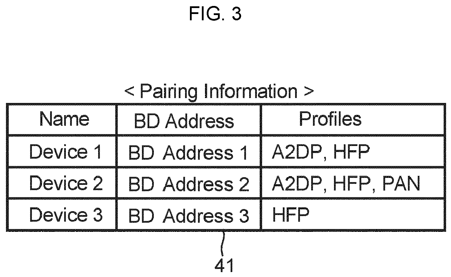

FIG. 3 is a schematic diagram showing an example of pairing information 41. As shown in FIG. 3, the pairing information 41 is information defining correspondence between names, BD (Bluetooth Device) addresses and profiles of the communication terminals 12 that are paired with the onboard device 10.

The names are product names of the communication terminals 12. Because there is a possibility that a product name may be used redundantly by the communication terminals 12, they cannot be used as identifiers for uniquely identifying the communication terminals 12. Therefore, in the present embodiment, combination of the names and the BD addresses are used as the identifiers for the communication terminals 12.

The profile is a function, from among the functions of the communication terminal 12, that can be used by the onboard device 10 when the onboard device 10 and the communication terminal 12 are connected via Bluetooth^{®}. A2DP (Advanced Audio Distribution Profile), HFP (Hands-Free Profile) and PAN (Personal Area Network Profile) are examples of such a profile.

A2DP is an audio function for playing music or other audio contents. HFP is a hands-free voice communication function. PAN is a tethering function.

The pairing unit 25 acquires the name, the BD address, and the profiles from each individual communication terminal 12 during pairing. The pairing information managing unit 26 stores these, in correspondence with each other, in the pairing information 41.

Returning to FIG. 2, when a pairing has been established for one of the communication terminals 12, the display control unit 27 displays, on the display unit 20, a screen for querying whether or not to connect that communication terminal 12 via Bluetooth^{®} with higher priority than the other communication terminals 12.

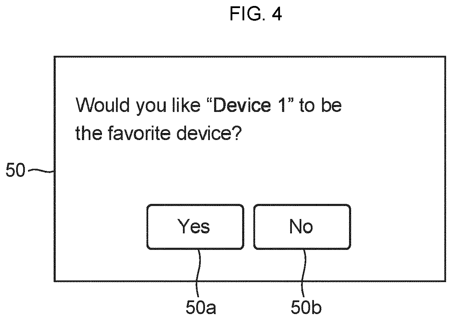

FIG. 4 shows an example of the query screen 50 asking "Would you like "Device 1" to be the favorite device?". This means a question of whether or not to connect this communication terminal 12 having the name of "Device 1" with priority for the future.

Here the user presses the YES button 50a if the user wishes to connect with priority, but if not, the user presses the NO button 50b.

Returning to FIG. 2, the receiving unit 28 receives an instruction to connect with higher priority than the other communication terminals by detecting that the YES button 50a (referencing FIG. 4) being pressed. Note that in the below, connecting a particular communication terminal 12 in this way via Bluetooth^{®} first, with higher priority than the other communication terminals 12, is termed "priority connection."

The priority information managing unit 29 is a processing unit for updating the priority information 42 when the receiving unit 28 has received an instruction of the priority connection.

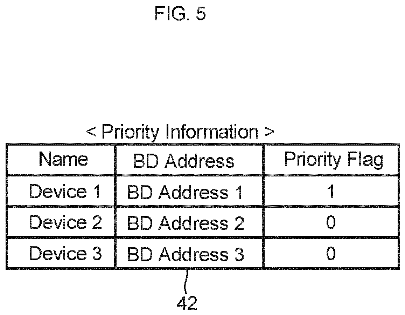

FIG. 5 is a schematic diagram showing an example of priority information 42. The priority information 42 is information comprising the names, the BD addresses, and priority flags of the paired communication terminals 12 in correspondence with each other.

These combinations of the names and the BD addresses function as identifiers for uniquely identifying the individual communication terminals 12, as described above.

On the other hand, a priority flag is an example of a priority setting, and is information indicating whether or not to connect the communication terminal 12 to the onboard device 10 by the priority connection. If the priority flag is "1," this indicates that the connection is to be done by the priority connection, but if the priority flag is "0," this indicates not to connect by the priority connection. Note that the priority flag is "0" by default.

When the receiving unit 28 has received the instruction that a certain communication terminal 12 is to be connected by the priority connection by detecting that the YES button 50a (referencing FIG. 4) is pressed, the priority information managing unit 29 will set the priority flag corresponding to that communication terminal 12 to "1". On the other hand, if the user presses the NO button 50b, the priority flag will remain "0".

The priority information managing unit 29 does not create an entry in the priority information 42 if there is no paired communication terminal 12 thus no entry in the pairing information 41 (FIG. 3). The priority information managing unit 29 generates an entry for the communication terminal 12 in the priority information 42 when an entry for a communication terminal 12 is created in the pairing information 41 through pairing a new communication terminal 12. At this time, the priority flag corresponding to the newly added communication terminal 12 is "0".

In the example in FIG. 5, the names and the BD addresses of the "Device 2" and "Device 3" communication terminals 12, which will not be connected by the priority connection, are also stored in the priority information 42. However, the present embodiment is not limited thereto. For example, the priority information managing unit 29 may instead be configured so as to store, in the priority information 42, only the name and the BD address relating to the "Device 1" communication terminal 12 that is subject to priority connection, without storing, in the priority information 42, the names and the BD addresses for the "Device 2" and "Device 3" communication terminals 12 that will not be connected by the priority connection.

Returning to FIG. 2, the detecting unit 30 detects the presence of the communication terminals 12. For example, the detecting unit 30 detects the presence of each individual communication terminal 12 by detecting advertising signals sent by the individual communication terminals 12 through the communicating unit 22.

Upon the detecting unit 30 detecting the presence of a certain communication terminal 12, the connection control unit 31 connects that communication terminal 12 by the priority connection if the priority flag corresponding to that communication terminal 12 is "1" in the priority information 42 (referencing FIG. 5).

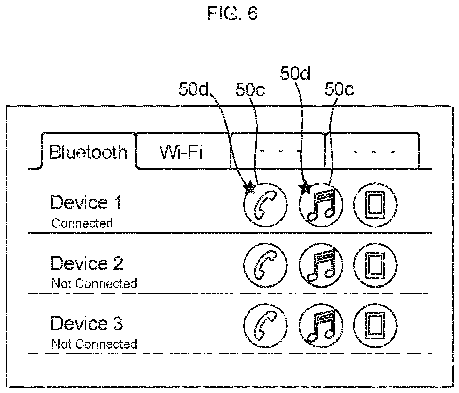

FIG. 6 is an example of a screen display when such priority connection is carried out. As described above, the communication terminal 12 has a plurality of profiles. The display control unit 27 sends, to the display unit 20, an instruction to display the character string "Connected" under the name of the communication terminal 12 that is connected by any of the profiles. In the example in FIG. 6, the communication terminal 12 having the name of "Device 1" is connected with one of the profiles. Moreover, the display control unit 27 sends, to the display unit 20, an instruction to display the character string "Not Connected" under the names of the communication terminals 12 that are not connected under any profile.

The display control unit 27 sends an instruction to emphasis display icons 50c that indicate the connected profiles to the display unit 20. These icons 50c are emphasized using a color that is conspicuous against the background color. For example, if the background color is black, the display control unit 27 emphasizes the display of the icon 50c in orange. Through this, the user can easily recognize the profile that has become usable through the wireless connection.

When a communication terminal 12 has been connected by the priority connection, the display control unit 27 may also provide notification of the profile that is available for use by the communication terminal 12 by displaying a star mark 50d in the vicinity of the icon 50c for that profile. An example is shown here of a case wherein a communication terminal 12 of the name "Device 1" is connected through priority connection, and the profiles for HFP (telephone mark) and A2DP (note mark) of the communication terminal 12 can be used.

Returning to FIG. 2, the connection sequence information managing unit 32 stores, in the storing unit 24, connection sequence information 43 that indicates the order in which pairings were established with the individual communication terminals 12.

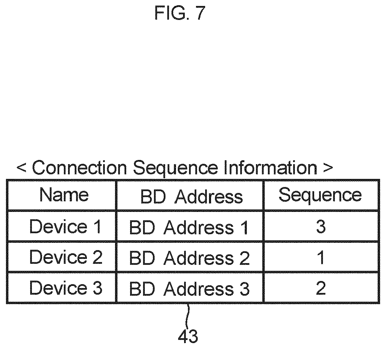

FIG. 7 shows an example of the connection sequence information 43. As illustrated in FIG. 7, the connection sequence information 43 is information that defines a correspondence between the sequence and the combinations of names and the BD addresses that are the identifiers for each of the individual communication terminals 12. The sequences are integer values indicating the order with which pairings were established with the communication terminals 12 (the pairing sequence). Note that when an entry for pairing information 41 (referencing FIG. 3) is added to the pairing sequence, the pairing sequence can be expressed by the pairing information 41. In this case, the pairing information 41 may be used as the connection sequence information 43, or both of these information 41 and 43 may be present.

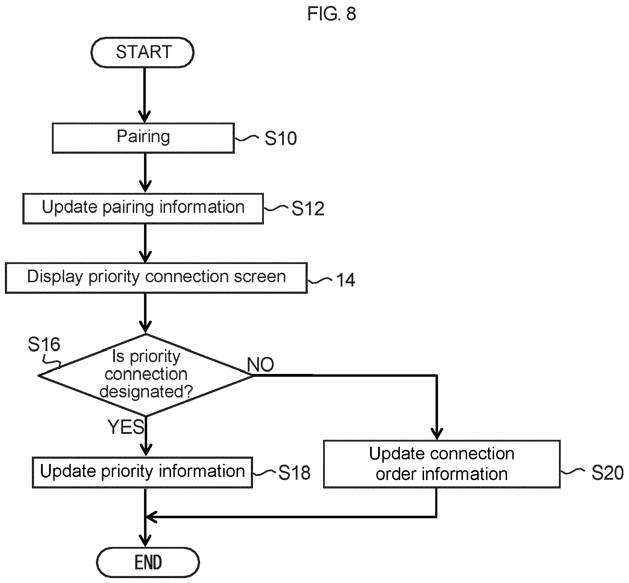

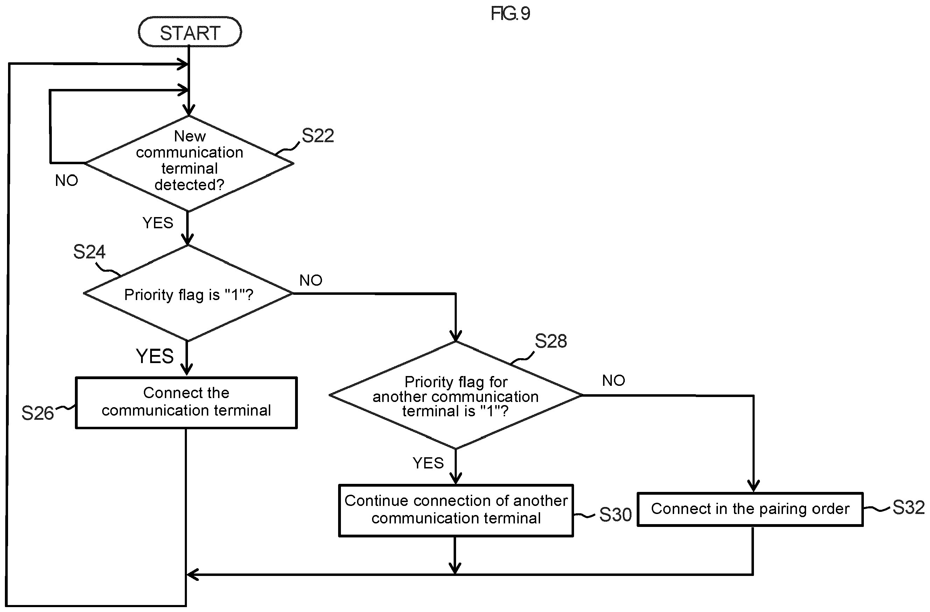

A wireless connecting method according to the present embodiment will be explained in reference to FIG. 8 and FIG. 9. FIG. 8 is a flowchart showing an example of a process when pairing with a communication terminal 12.

The pairing unit 25 establishes pairing with one of a plurality of communication terminals 12 (Step S10). In this case, the pairing unit 25 acquires, from the communication terminal 12, the name, the BD address, and profile(s) of the communication terminal 12 that has been paired. In Step S10, the communication terminal 12 that has been paired is an example of a first communication terminal.

The pairing information managing unit 26 next updates the pairing information 41 (referencing FIG. 3). For example, the pairing information managing unit 26 adds, to the pairing information 41, the name, the BD address, and the profile(s) acquired in Step S10 (Step S12).

Following this, the display control unit 27 carries out control for displaying, on the display unit 20, a query screen 50 (referencing FIG. 4) for querying whether or not the communication terminal 12 that was paired in Step S10 will be subject to priority connection (Step S14).

The receiving unit 28 next evaluates whether or not there has been an instruction to make the communication terminal 12 that was paired in Step S10 subject to priority connection, through detecting whether or not the YES button 50a of the query screen 50 (referencing FIG. 4) has been pressed (Step S16).

If here the evaluation is that there was the instruction (YES), processing jumps to Step S18. In Step S18, the priority information managing unit 29 sets, to "1", the priority flag that corresponds to the communication terminal 12 that was paired in Step S10, from among the plurality of priority flags included in the priority information 42 (referencing FIG. 5).

On the other hand, if the evaluation in Step S16 is that there was no instruction (NO), processing advances to Step S20. In Step S20, the connection sequence information managing unit 32 updates the connection sequence information 43 (referencing FIG. 7). Here the connection sequence information managing unit 32 stores, in the connection sequence information 43, a sequence that indicates what number of communication terminal 12, paired in Step S10, was pairing with the onboard device 10, in correspondence with the name and BD address of that communication terminal 12. The process when pairing the communication terminal 12 is completed through the above.

FIG. 9 is a flowchart showing an example of a process when a paired communication terminal 12 is connected through Bluetooth^{®}. This example is a process when the onboard device 10 has detected a new communication terminal 12 in the case that the onboard device 10 is already connected to a given communication terminal 12. If the onboard device 10 has detected a new communication terminal 12 when no communication terminal 12 is connected to the onboard device 10, the onboard device 10 is connected to the communication terminal 12 without following the flow set forth below.

First, in Step S22, the detecting unit 30 evaluates whether or not a new communication terminal 12 is present in the vehicle, through attempting detection of the advertising signals that are sent from each of the plurality of communication terminals 12 that are recorded in the pairing information 41 (referencing FIG. 3). If here the presence of a new communication terminal 12 cannot be detected (NO), Step S22 is repeated.

On the other hand, if the existence of a new communication terminal 12 is detected in Step S22 (YES), processing advances to Step S24.

In Step S24, the connection control unit 31 references the priority information 42 (FIG. 5) to evaluate whether or not " 1" is set for the priority flag that corresponds to the new communication terminal 12 that was detected in Step S22.

If here the connection control unit 31 evaluates that the priority flag is set to "1" (YES), processing advances to Step S26.

In Step S26, the connection control unit 31 connects the new communication terminal 12, detected in Step S22, via Bluetooth^{®} through priority connection.

On the other hand, if the evaluation in Step S24 is that the priority flag is not set to " 1" (NO), processing advances to Step S28. In Step S28, the connection control unit 31 references the priority information 42 (FIG. 5) to evaluate whether or not a priority flag, of any other communication terminal 12 that has already been connected via Bluetooth^{®} to the onboard device 10 prior to detection of the new communication terminal 12 in Step S22, has been set to "1".

If here the evaluation is that the priority flag is set to "1", processing advances to Step S30. In Step S30, the connection control unit 31 continues the wireless communication with the communication terminal 12 that was evaluated, in Step S28, as the priority flag having been set to "1."

On the other hand, if, in Step S28, the evaluation is that there is no priority flag for another communication terminal 12 set to "1" (NO), processing advances to Step S32. In Step S32, the connection control unit 31 connects the communication terminals 12 following the sequence indicated by the connection sequence information 43 (referencing FIG. 7).

Let us consider a case wherein, for example, as in FIG. 7, "Device 1," "Device 2," and "Device 3" have each already been paired by Step S10, paired with the onboard device 10 with the respective sequences of "3," "1," and "2". Let us assume that the onboard device 10 and the "Device 2" communication terminal 12 are already connected via Bluetooth^{®}. In this case, if, in Step S22, the "Device 3" communication terminal 12 is newly detected, the connection control unit 31 continues the wireless connection with "Device 2" of sequence "1", rather than a connecting with the "Device 3" communication terminal 12 that is of a pairing sequence that is later than that of "Device 2".

On the other hand, if the onboard device 10 and the "Device 1" communication terminal 12 are already connected via Bluetooth^{®}, the connection control unit 31 will terminate the wireless connection with the "Device 1" communication terminal 12, and connect to the "Device 3" communication terminal 12 that is of a pairing sequence that is earlier than that of "Device 1."

The basic process carried out by the onboard device 10 relating to the present embodiment is completed through the above.

Given the present embodiment described above, when pairing a communication terminal 12 in Step S10, the display control unit 27, in Step S14, performs control to display, on the display unit 20, the query screen 50 (referencing FIG. 4). This makes it possible to for the user to send, to the onboard device 10, an instruction for carrying out priority connection when pairing a communication terminal 12. The result is that after a communication terminal 12 has already been connected via Bluetooth^{®} to the onboard device 10 in Step S26, S30, S32, or the like, in FIG. 9, for example, no screen for switching the communication terminal 12, for carrying out the priority connection, will be presented to the user by the onboard device 10, and thus there will be no need for the user to perform a switching instruction through this screen. This thus enables a reduction in the burden on the user.

Moreover, if the user does not wish priority connection for any of the plurality of communication terminals 12, all of the priority flags included in the priority information 42 will be "0". In this case, in Step S32 the connection control unit 31 connects the individual communication terminals 12 following the pairing sequence indicated by the connection sequence information 43 (referencing FIG. 7). This enables each of the communication terminals 12 to be connected via Bluetooth^{®} to the onboard device 10, even if the user does not desire priority settings for the plurality of communication terminals 12.

### < Modified Example >

With Bluetooth^{®}, the onboard device 10 can connect simultaneously to the two communication terminals 12 with different profiles. For example, when the onboard device 10 is connected to a given communication terminal 12 with the A2DP profile, it can connect to another communication terminal 12 with the HFP profile. Because of this, the ability of the onboard device 10 to connect, with priority, to a communication terminal 12 for each profile increases the convenience for the user.

Given this, as in the below, the configuration may be such that the priority information managing unit 29 sets the priority flags for the priority information 42 for each individual profile, as in the below.

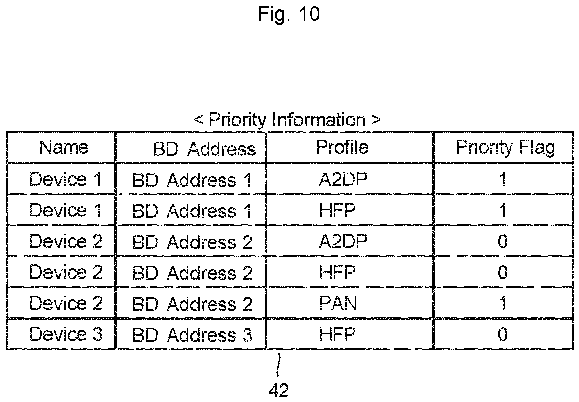

FIG. 10 shows an example of priority information 42 relating to such a modified example. In the example in FIG. 10, priority flags are set for each of a plurality of profiles for each communication terminal 12. To set priority flags in this way, in the query screen 50 (referencing FIG. 4) the display control unit 27 should query the user as to which of the plurality of profiles is to be used for the connection that is to be made the priority connection. As an example, the display control unit 27 displays, on the query screen 50 (referencing FIG. 4), icons indicating each of the profiles, enabling the user to press the icon that corresponds to the profile for making the priority connection.

Given this, the connection control unit 31 connects a communication terminal 12 to the onboard device 10 for each profile wherein the priority flag is set to "1" in the priority information 42. In the example in FIG. 10, when the functions of the A2DP and HFP profiles are to be provided, the connection control unit 31 connects the "Device 1" communication terminal 12 to the onboard device 10. The functions of A2DP and HFP can be achieved through the "Device 1" communication terminal 12. On the other hand, when the functions of the PAN profile are to be provided, the connection control unit 31 connects the "Device 2" communication terminal 12 to the onboard device 10. Through this, the onboard device 10 can connect, through priority connection, to a communication terminal 12 for each profile, improving convenience for the user.

Note that in the example in FIG. 10, each of the communication terminals 12 of "Device 1," "Device 2," and "Device 3" has a HFP profile. Even if a plurality of communication terminals 12 have identical profiles, Bluetooth^{®} standard only allows the onboard device 10 to use that profile with the single communication terminal 12. Because of this, in case that a plurality of the communication terminals 12 have identical functions, preferably the priority information managing unit 29 sets to "1" a priority flag corresponding to the function in only one of the communication terminals 12.

### < Hardware Structure >

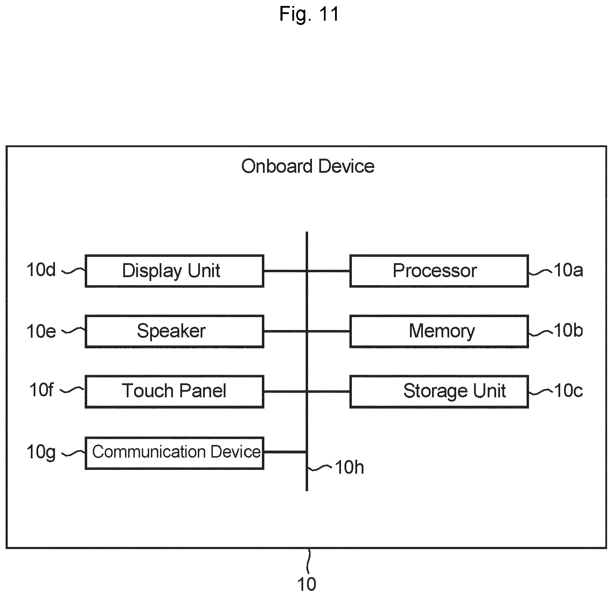

FIG. 11 shows an example of hardware of the onboard device 10 according to the present embodiment. As shown in FIG. 11, the onboard device 10 comprises a processor 10a, a memory 10b, a storage unit 10c, a display unit 10d, a speaker 10e, a touch panel 10f and a communicating device 10g. Each of these units are connected together through a bus 10h.

The processor 10a comprises semiconductor devices: a CPU (Central Processing Unit) or a GPU (Graphical Processing Unit). The memory 10b is a volatile storage medium such as a DRAM (Dynamic Random-Access Memory) for storing data and programs temporarily. The functions of the processing unit 23 (referencing FIG. 2) are achieved through the processor 10a and the memory 10b working together to execute a program according to the present embodiment.

The storage unit 10c is a non-volatile storage medium such as an HDD (Hard Disk Drive), an SSD (Solid State Drive), a ROM (Read-Only Memory), and stores a program related to the present embodiment. The functions of the storing unit 24 in FIG. 2 are achieved through the storage unit 10c and the memory 10b.

The display unit 10d is, for example, a liquid crystal display or an organic EL display that is installed in a console panel on the front panel within the vehicle. The functions of the display unit 20 in FIG. 2 are achieved by this display unit 10d.

The speaker 10e is hardware for outputting audio such as audio guidance of route navigation. The touch panel 10f is an inputting device that is layered on the displaying device 10d, to receive touch operations from the user. The input unit 21 of FIG. 2 is achieved through this touch panel 10f.

The communication device 10g is hardware that serves as the interface when wirelessly connecting each of the communication terminals 12 via Bluetooth^{®}. The communicating unit 22 of FIG. 2 is achieved through this communication device 10g.

The effects described in this specification are merely illustrative examples, and there is no limitation thereto, but rather there may be other effects.

The present invention is not limited to the embodiment set forth above, but rather includes a variety of modified examples. For example, each embodiment set forth above explained details in order to explain the present invention so as to be easily understood, but the present invention need not necessarily be provided with all of the structural elements that were described. A unit of the structure of the embodiment may be replaced with a structure of another embodiment, or a structure of another embodiment may be added to the structure of a given embodiment.

Moreover, each of the various structures, functions, processing units, processing means, and the like described above may be achieved, in whole or in part, through hardware through, for example, an integrated circuit. Each of the structures, functions, or the like, listed above, may be achieved through software by a processor interpreting and executing programs for achieving each of the functions. Information such as programs, evaluation tables, files, and the like, for achieving each of the functions may be stored in memory or a storage device such as an HDD or an SSD, or the like, or on a recording medium such as an IC (Integrated Circuit) card, an SD (Secure Digital) card, a DVD (Digital Versatile Disc), or the like. While the control lines and data lines thought to be necessary for the explanation were shown, not all control lines or data lines in the product are necessarily shown. Actually, substantially all of the structures may be considered to be connected together.

The present invention is not only a wireless connection device itself that is an onboard device, but may be provided in a variety of forms such as a wireless connecting method through the wireless connection device, or a program that can be read from a computer. Additionally, the present invention may be applied to devices that are mounted in vehicles such as diesel trains, electric trains, boats, ferries, and the like, rather than just automobiles. Moreover, application of the present invention is not limited to onboard devices such as navigation devices, audio devices, and the like, but the present invention may be applied to vehicle control devices, such as ECUs (Engine Control Units), IT (Information Technology) devices such as smart phones and PCs (Personal Computers), game machines, home audio devices, and other devices, insofar as they have wireless connecting functions.

### [Explanations of Reference Symbols]

10: Onboard Device
11: Automobile
12: Communication Terminal
20: Display unit
21: Input unit
22: Communicating Unit
23: Processing Unit
24: Storing Unit
25: Pairing Unit
26: Pairing Information Managing unit
27: Display Control unit
28: Receiving Unit
29: Priority Information Managing unit
30: Detecting Unit
31: Connection Control unit
32: Connection Sequence Information Managing unit
41: Pairing Information
42: Priority Information
43: Connection Sequence Information
50: Screen
50a: YES button
50b: NO button
50c: Icon
50d: Star mark

## Claims

1. A wireless communication device comprising:
a display unit (20);
a pairing unit (25) that is capable to pair a plurality of communication terminals (12) with the wireless communication device (10);
a display control unit (27) that displays a query screen (50) on the display unit (20) for querying whether or not to connect a first communication terminal (12) with priority over other communication terminals (12) when pairing has been established for the first communication terminal (12) among the communication terminals (12);
a receiving unit (28) that receives an instruction for connecting the first communication terminal (12) with priority over other communication terminals (12);
a priority information managing unit (29) that stores a priority setting in a storing unit (24), the priority setting indicates that the first communication terminal (12) is to be connected with priority over other communication terminals (12) upon the receiving unit (28) receiving the instruction;
a detecting unit (30) that detects presence of any of the communication terminals (12); and
a connection control unit (31) the connects the first communication terminal (12) with priority over the other communication terminals (12) if and the priority setting is stored in the storing unit (24) when the detecting unit (30) detects the presence of the first communication terminal (12).

2. The wireless communication device according to claim 1, further comprising:
a connection sequence information managing unit (32) for storing connection sequence information (43) in the storing unit (24), the connection sequence information (43) defines correspondence between identifiers for each of the paired communication terminals (12) and the sequence with which the pairings were established,
wherein, the connection sequence information managing unit (32) stores the identifiers for the first communication terminals (12) in correspondence with the sequence with which pairings of the first communication terminals (12) are established in the connection sequence information (43) if the receiving unit not received the instruction,
wherein, upon the detecting unit (30) detecting the presence of the first communication terminal (12), the connection control unit (31) connects to any of the communication terminals (12) following the order indicated by the connection sequence information (43) if the priority setting is not stored in the storing unit (24) for any of the communication terminals (12).

3. The wireless communication device according to claim 1 or claim 2, wherein each of the communication terminals (12) has a plurality of functions; the priority information managing unit (29) stores the priority settings for each of the functions in the storing unit (24); and the connection control unit (31) performs a connecting process for each of the functions for which the priority setting is stored in the storing unit (24).

4. The wireless communication device according to claim 1, wherein the priority setting for the same function can be stored only for the selected one communication terminal (12) even if the two or more communication terminals (12) has the same function.

5. A method for controlling wireless communications of a wireless communication device, which is connected with communication terminals, including the steps of:
establishing pairings with the communication terminals (12);
displaying a query screen (50) on the display unit (20) for querying whether or not to connect a first communication terminal (12) with priority over other communication terminals (12) when pairing has been established for the first communication terminal (12) among the communication terminals (12);
receiving an instruction for connecting the first communication terminal (12) with priority over other communication terminals (12);
storing a priority setting in a storing unit (24), the priority setting indicates that the first communication terminal (12) is to be connected with priority over other communication terminals (12) upon receipt of the instruction;
detecting presence of any of the communication terminals (12); and
connecting the first communication terminal (12) with priority over the other communication terminals (12) if and the priority setting is stored in the storing unit (24) when the presence of the first communication terminal (12) is detected.
